# NEW EUROPEAN PATENT SPECIFICATION

(11) **EP 0 672 890 B2**
(45) Date of publication and mention of the opposition decision: **07.01.2009**
(45) Mention of the grant of the patent: 30.01.2002
(21) Application number: 95103967.6
(22) Date of filing: 17.03.1995
(51) Int. Cl.: G01C 21/20, G09B 29/10, G08G 1/0969

(54) **Sight-seeing tour guide system**
Reiseführersystem
Système de guide touristique

(30) Priority: 18.03.1994 JP 4923594; 26.12.1994 JP 32202294; 18.03.1994 JP 4923694; 02.05.1994 JP 9346494; 02.05.1994 JP 9346594
(43) Date of publication of application: 20.09.1995
(73) Proprietor: AISIN AW CO., LTD., Anjo-shi Aichi-ken 444-11 (JP)
(72) Inventor: Kamiya, Kazuo, Anjo-shi, Aichi 446 (JP); Morimoto, Hirofumi, Nishio-shi, Aichi 445 (JP); Yokoyama, Shoji, Anjo-shi, Aichi 446 (JP)
(74) Representative: Vossius & Partner

(56) References cited:
- EP-A2- 0 539 143
- WO-A-93/20546
- WO-A1-93/20546
- DE-A- 3 512 000
- DE-A1- 3 512 000
- DE-A1- 4 118 606
- US-A- 4 630 209
- HIDEO ODAGAKI, SEJI KAWAMURA, YOSHINOBU KOBAYASI "AUTOMOBILE NAVIGATION SYSTEM WITH MULTI-SOURCE GUIDE INFORMATION" vol. SAE TECHNICAL PAPER SERIES 920748, page 97-105

## Description

The present invention relates to a guide system for tracing a present position of a vehicle to guide the sight-seeing in the vicinity of a road being followed by the vehicle.

There have been proposed a variety of navigation systems which are enabled to select an optimum route and guide the course to a destination by designating a starting point (or present point) and the destination. In the navigation systems proposed in the prior art, the course guidances are exclusively carried out by instructing the rightward or leftward turns or the advancing direction along the route to the destination with respect to intersections or characteristic targets. Of these proposals, some system is enabled to guide the sight-seeing by making use of those functions.

In JP-A-290473/1986, JP-B-19005/1988 or JP-A-1520/1992, for example, there are proposed systems, in which storage means is provided for storing the sight-seeing information and in which the present position of the vehicle is detected and displayed in the display together with the map and the running direction while the sight-seeing information is additionally outputted in voice. Moreover, this voice output is replaced for the guidance by the picture display. DE-A-4118606 discusses a navigation system selectively displaying street-information relating to the vehicles current position. In a specific embodiment, street information relating to streets lying within a variable fan-shoped area in the direction of travel is displayed with preference.

DE-A-4118606 discusses a navigation system selectively displaying street-information relating to the vehicles current position. In a specific embodiment, street information relating to streets lying within a variable fan-shaped area in the direction of travel is displayed with preference.

In the guide systems of the prior art described above, however, there is searched from the detected present position an object which exists at the present position or on the road to be followed. This makes it impossible to guide the objects other than those which exist at the place facing the road. It is also impossible to guide the objects which are present near the road being or to be followed. Especially, an interesting and important "guidance object" (i.e., object to be guided) failing to face the road cannot be guided, even if it is actually present in the neighborhood, because it cannot satisfy the condition for the object guidance.

WO 93/20546 relates to an electronic voice tourist guide system consisting of a plurality of devices including a system for receiving signals from a constellation of satellites and capable of position determination, a system for receiving radio frequency signals, a digital optical disk reader, a keypad with a tactile or non-tactile configurable screen.

The present invention has been conceived to solve the above-specified problems and has an object to provide a guide system capable of suitably guiding even an object other than those which are present in the place facing the road. This object is achieved with the features of the claims.

The guide system as described comprises: guide data storage means stored with guide data for guiding an object along a road or an object on a street or in an area; guidance output means for out-putting a guidance of the object to be guided; present position detecting means for detecting and tracing a present position; guide output means including first search means for searching the guidance object on the basis of the present position obtained by the present position detecting means, and second search means for searching the guidance object within a range different from that of the first search means, for reading out and outputting the object, which is searched by the search means, from the guide data storage means; and a manual key for instructing the search of the second search means, wherein the guide output means searches the guidance object by the second search means in place of the first search means, when the manual key is operated, so that the guidance object is extracted and outputted for the guidance to the guide output means.

The guide system as described comprises: guide data storage means stored with guide data for guiding an object along a road or an object on a street or in an area; guidance output means for outputting a guidance of the object to be guided; present position detecting means for detecting and tracing a present position; guide output means including first search means for searching the guidance object on the basis of the present position obtained by the present position detecting means, and second search means for searching the guidance object within a range different from that of the first search means, for reading out and outputting the object, which is searched by the search means, from the guide data storage means; and a manual key for instructing the search of the second search means, wherein the guide output means searches the guidance object by the second search means in place of the first search means, when the manual key is operated, so that the guidance object is extracted and outputted for the guidance to the guide output means. The guidance object is searched and extracted by the first search means, if the manual key of the control means is not operated, but by the second search means for searching the guidance object within a range different from that of the first search means, if the manual key is operated. As a result, the guidance of the object, which was not searched by the first search means, can be outputted.

By setting the selection order of the extracted objects, moreover, the guidance can be outputted sequentially of the objects closer to the present position or having the higher priority of the guide data, which are individually set in advance for the objects, so that a desired guidance object can be easily selected and outputted with reference to the list.
Fig. 1 is a block diagram showing one embodiment of a guide system according to the present invention;
Fig. 2 presents diagrams for explaining the guidance starting conditions;
Fig. 3 is a diagram for explaining a guide point of one object;
Fig. 4 is a diagram for explaining the setting of a "guided object" (i.e., object which was already guided or has been guided);
Fig. 5 is a diagram for explaining an example of a guidance object;
Fig. 6 is a block diagram showing an example of the system construction, especially its guide output means;
Fig. 7 is a flow chart for explaining the overall routine of the guide system;
Fig. 8 is a flow chart for explaining a routine for detecting the guidance object;
Fig. 9 is a flow chart for explaining a routine for controlling the picture/voice outputs;
Fig. 10 presents flow charts for explaining picture switching FG routines;
Fig. 11 presents flow charts for explaining picture/voice outputting routines;
Fig. 12 is a flow chart for explaining a guidance object searching routine;
Fig. 13 is a diagram showing an example of keys constituting control means;
Fig. 14 is a diagram for explaining the setting of a present position;
Fig. 15 is a diagram for explaining the switching of the scale of a map picture;
Fig. 16 is a diagram for explaining the decision of the north/south of the map picture;
Fig. 17 is a diagram for explaining the correction of the present position;
Fig. 18 is a diagram showing an example of the file structure of a guiding CD;
Fig. 19 is an exterior view of a vehicle carrying the guide system of the present invention;
Fig. 20 is a flow chart for explaining the routine of setting a "guided status" flag;
Fig. 21 is a flow chart for explaining the routine for determining an object guidance starting timing; and
Fig. 22 presents diagrams for explaining the relation between an object and an object guidance starting position.

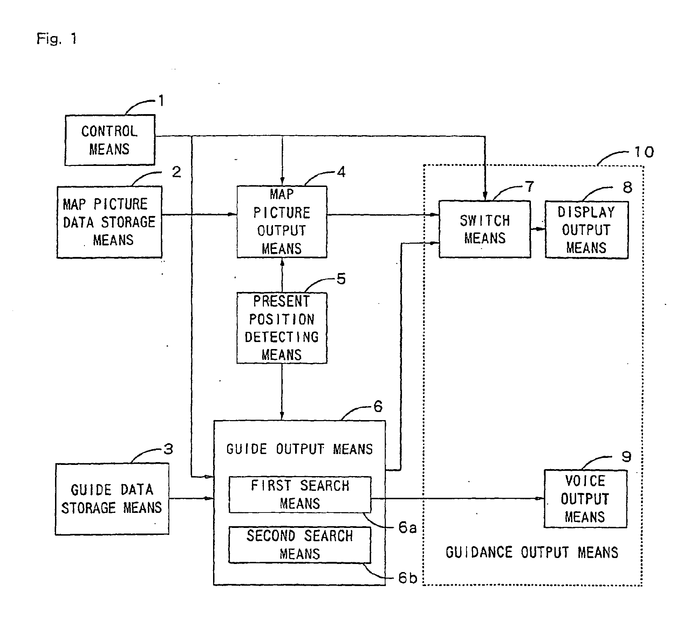

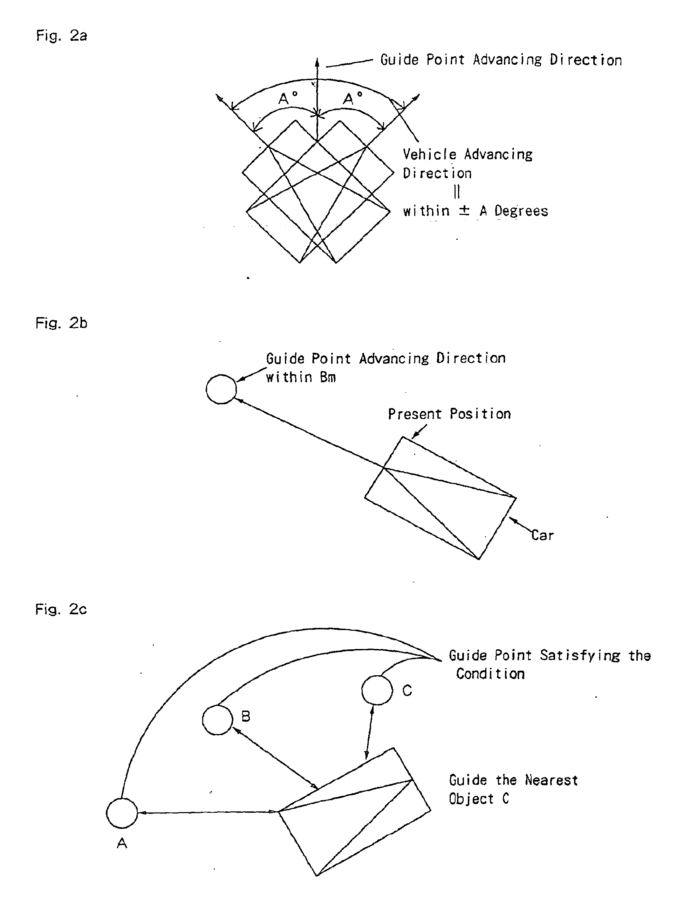

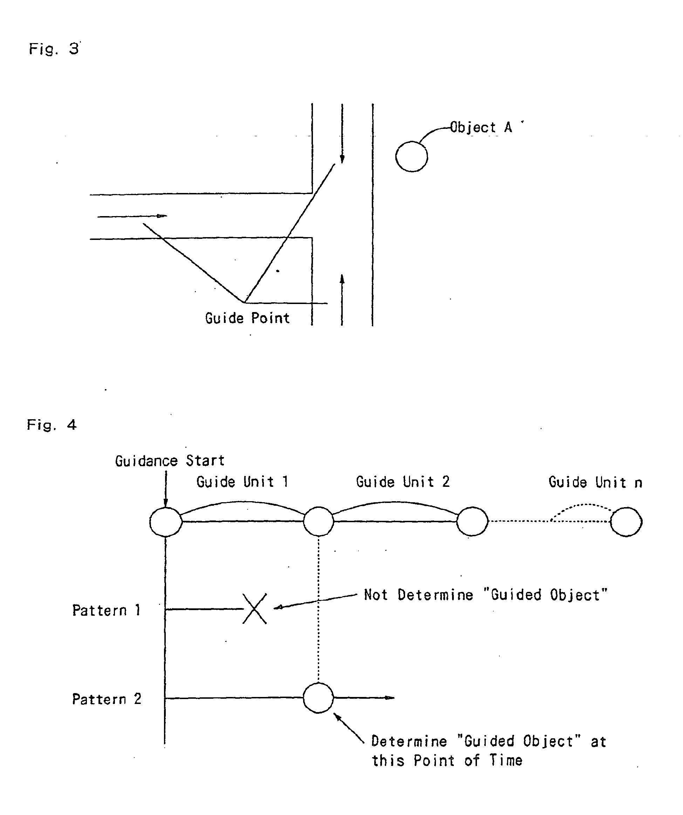

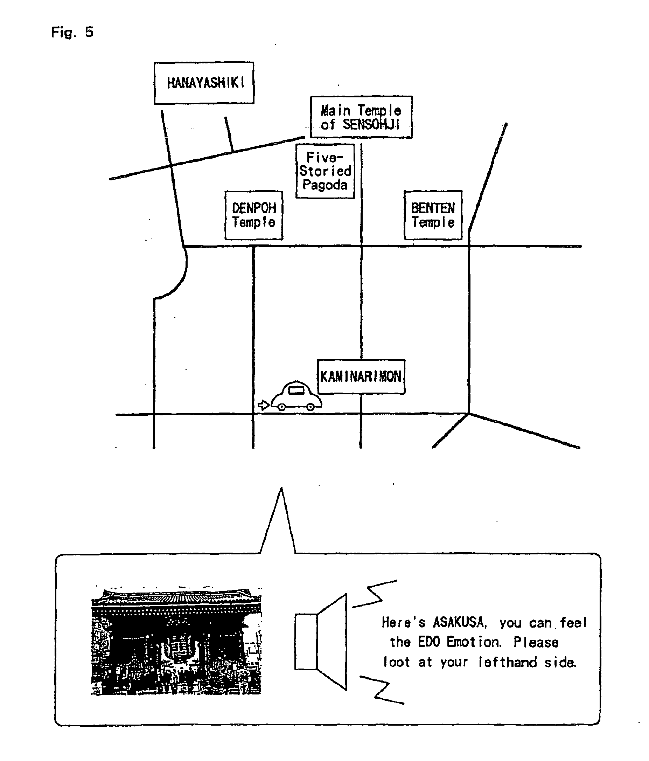

Fig. 1 is a block diagram showing one embodiment of a guide system according to the present invention; Fig. 2 presents diagrams for explaining the guidance starting conditions; Fig. 3 is a diagram for explaining a guide point of one object; Fig. 4 is a diagram for explaining the setting of a "guided object"; and Fig. 5 is a diagram for explaining an example of a "guidance object". Here, the quoted term "guided object" means the "object which was already guided or has been guided", and the quoted term "guidance object" means the "object which is to be guided".

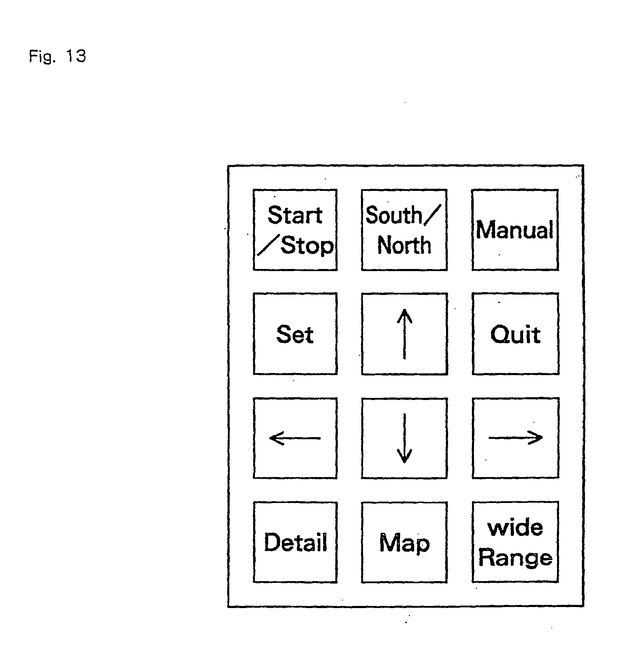

In Fig. 1, control means 1 is exemplified by a remote control unit having a variety of control keys, as shown in Fig. 13, for switching the map picture, which is displayed in display output means 8, between a detailed picture and a wide range picture, for inverting the display azimuth taking the north upward into that taking the south upward, and for switching a displayed guide picture into a map picture. Thus, the display output means 8 is used to display and output the guide picture of an object to be guided and the map picture, and voice output means 9 is used to output the guide voice of the object to be guided. Map picture data storage means 2 is used to store the roads divided by meshes and the map picture data of the guidance object, and guide data storage means 3 is used to store the guide data of the objects along roads, the streets, and the pictures and voices for guiding the objects in areas. Moreover, the guide data of each object may be divided into a plurality of short guide units (or phrases) which are set with priority. Present position detecting means 5 is used detect and trace the north latitude and east longitude, the present position of a road to run, the azimuth to advance, the vehicle speed and so on by using a GPS (i.e., Global Positioning System) receiver, a vehicle speed sensor, a steering angle sensor, a gyro sensor and/or an earth magnetism sensor. Map picture output means 4 is used to read the map picture data around the present position from the map picture data storage means, to output the display signals of the map picture and the advancing direction. Guide output means 6 is composed of first search means 6a and second search means 6b having different search ranges, which are switched and used according to the manual key operations of the control means 1, to search and decide the guidance object on the basis of the information of the present position, the advancing direction, the vehicle speed and/or the road and to read out the guide data from the guide data storage means 3 thereby to convert and output the guide data into the picture signals and voice signals for the guidance. If, during the guidance of an object, a next object is extracted, the guidance of the object being guided may be quitted at the guide unit, and the guidance of the next object may be started. If the next guidance object is then extracted, they are compared in priority, and the guidance of the next guidance object is started to register the previous guidance so as to prevent the double guidance of the guided object, on condition that the next one has a higher priority. Switch means 7 is used to switch the display output of the display output means 8 between the map picture by the map picture output means 4 and the guide picture by the guide output means 6. When the guidance object is extracted to start the guidance by the picture and the voice while the vehicle is running with the displays of the present position and the advancing direction on the map picture, the display signals of the map picture are switched to the picture signals of the guidance by the guide output means 6. If, in this state, the map display keys of the control means 1 are operated, the switching from the guide picture to the map picture is instructed. Guidance output means 10 to be disclosed in the present invention is constructed to include the switch means 7, the display output means 8 and the voice output means 9.

The guide system having the above-specified construction according to the present invention is energized by ACC-ON to display a title picture on the display of the display output means and is deenergized by ACC-OFF. If, moreover, the CD-ROM having the program stored therein is set in when the power is made, the program is started. If the CD-ROM is set in after the power is made, the program is started by the operation of the control means 1. When the guide program is started, the present position is sequentially detected and traced as the vehicle runs, so that the map picture taking the north upward and displaying the present position at the center with the arrow indicating the advancing direction is displayed on the display of the display output means 8. The guidance object is suitably guided if it is searched from the present position, the advancing direction and the vehicle speed and is extracted from the guide data storage means 3.

The guidance object is classified into: a point object such as facilities, buildings or monuments; a linear object having a width such as bridges, streets, lakes or large facilities; and a zone object such as national parks, plains or areas. The point object has its guidance start restricted in timing, but the linear object or the zone object can be selected within a considerable range. As a result, the linear object is preferred over the zone object, and the point object is preferred over the linear object, so that the linear object or the zone object can be given a sufficient preference to be outputted, even after the guidance of an important point object has been preferentially outputted. For example, the priority may be set such that the linear object or zone object is extracted in case there is no point object to be guided, or such that the linear object is not searched before the point object whereas the zone object is not searched before the linear object.

The guidance is accomplished in the following manner. A guidance object stored in the guide data storage means 3 is extracted from the information of the present position, the advancing direction and the vehicle speed by the first search means 6a of the guide output means 6, and is automatically outputted in terms of the guide picture and the guide voice by the guide output means 6 when it is approached by the vehicle, on condition that it is not guided yet and that no other object is being guided. This search is ranged such that the vehicle advancing direction is within ± A degrees with respect to the guidance starting point advancing direction, as shown in Fig. 2(a), and such that the vehicle position is within B m from the guidance staring point coordinates by considering the vehicle speed, as shown in Fig. 2(b). By instructing the manual guide by the control means 1, the first search means 6a is replaced by the second search means 6b for the search of the guidance object. As shown in Fig. 2(c), an object, which is positioned in the search range (in which the vehicle advancing direction is within ± A' degrees with respect to the guidance starting point advancing direction and in which the vehicle position is within B' m from the guidance starting point coordinates with the vehicle speed being considered: A' degrees > A degrees; and B' > B) for extracting the guidance object near the present position (of the vehicle), may be extracted so that the extracted objects may be guided from the closest one to the present position or sequentially from the nearer ones. The objects may be given priority so that they may be guided from one having the highest priority.

In order, moreover, the guidance may always be started from the same guidance starting point on the map, the CD-ROM for reading out the guide data on the map has to be started the closer to this side of the guidance starting point as the vehicle speed grows the higher. For the higher vehicle speed for the same guide output time period, the guide output distance becomes accordingly the longer. If, therefore, the center of the guide output is to be aligned with that of the guidance object, the guidance starting point is shifted closer to this side on the map as the vehicle speed grows the higher. In order to read out the guide data for ensuring the guidance start at a desired guidance starting point even at a higher vehicle speed, it is necessary to get the time period t (which is calculated from the position of the present pickup and the position of the object data on the CD to be outputted) for each guidance object from the start of the CD-ROM to the reading of the guide data. This time period t can be converted into a distance s = K· v · t (wherein K is a constant) corresponding to the speed v of the vehicle. For the CD reading starting position, therefore, the guide data can be reliably read out up to the guidance starting point by locating the position on the map from that distance and the guidance starting point.

The condition for ending the guidance is based by outputting the guide data being outputted to the last. However, this guidance may be quitted till the guide unit being guided, when the guidance quitting switch is operated by the control means 1 or when the guidance comes to the guide point of another object. If, moreover, the comparison in priority between the guide unit of the object being guided and the leading guide unit of another object is made to reveal that the latter object has a higher priority, the guidance can also be quitted at the guide unit being guided. In short, the guide data is constructed of a plurality of guide unit each composed of one sheet of picture and a voice of several seconds, for example, so that the execution and quit of the guidance are judged at the guide unit. By setting the priority, moreover, in case a plurality of guidance objects satisfy the guidance starting conditions, the selection of the execution, the adjustment of the length and the quit of the guidance may be judged on the basis of the priority.

A plurality of guide points are given for one guidance object such that three guide points including the positions in the east longitude and north latitude and the vehicle advancing direction are given in the vicinity of a T-shaped road, as shown in Fig. 3. Of these guidance objects, moreover, the object having been guided is stored as the guided object so that an identical object may not be doubly guided. In this case, as shown in Fig. 4, the object, in which one or more guide units have been guided, may be set as the guided object. Alternatively, the object may be set as the guided one either for each guide unit or on condition that a predetermined guide unit having a high priority has been guided.

Here will be briefly described a specific example of the guidance. The situation, in which a vehicle is passing near KAMINARIMON of ASAKUSA, is shown in Fig. 5. As to KAMINARIMON or the guidance object, the guide picture and voice of KAMINARIMON, as shown, are stored in the guide data storage means 3. Thus, the guide output means 6 extracts the object, which satisfies the aforementioned guidance starting condition, from the guide data storage means 3 on the basis of the present position, advancing direction and speed of the vehicle, which are obtained from the present position detecting means 5. When the KAMINARIMON is extracted as the guidance object, the guide data of the guide picture and voice of KAMINARIMON are read out and are converted and outputted as the individual signals. When the guide picture signal is outputted, the switch means 7 switches the display signal of the map picture by the map picture output means 4 into the guide picture signal. As a result, the display output means 8 outputs the shown guide picture, and the voice output means 9 outputs the guide voice of "- - - EDO Emotion - - -". After this guidance ends, the guide output means 6 stores KAMINARIMON as its guided object so that the double guidance can be prevented even if KAMINARIMON is passed again in a different direction.

If, however, the guidance is performed merely by searching the object on the basis of the present position, as shown in Fig. 5, what is outputted is the guide picture and voice of KAMINARIMON if the vehicle runs straight from the left to the right of Fig. 5 and passes straight. The guidance of KAMINARIMON is not as wide as to include not only Main Temple of SENSOH-JI, Five-Storied Pagoda, DENPOH Temple, BENTEN Temple and HANAYASHIKI but also the objects which are located out of sight of the road being followed. In case, therefore, a guidance is desired on an important object (having a high priority) around the present position, the manual key of the control means 1 is operated, and the guide data output means 6 then extracts the object near the present position and guides and outputs it. In case there are extracted a plurality of objects, they may be listed up so that a desired one may be outputted either selectively or in the order closer to the present position. Alternatively, an object near the present position is guided, and an object near to the guided object is guided, or the individual objects are given priority in advance so that they may be outputted in the higher order of priority. Moreover, guide sentences are divided into the guide units for proper expressions, as follows: "Please look at your righthand side - - -", in case an object facing the road being followed is automatically extracted from the present position and is guided and outputted; and "Deeply at your righthand side - - -" or "Near at your righthand side - - -", in case an object out of sight from the road being followed is to be guided by the manual keys.

Moreover, when this object guidance is started, it may happen that the present position of the vehicle, the position of the object, and the circumstance of the object are unknown. In this case, according to the present invention, the map key is operated by the control means 1 to instruct the switching of the map picture. Then, the switch means 7 switches the guide picture signals by the guide output means 6 to the display signals of the map picture by the map picture output means 4 so that the map picture, as shown in Fig. 5, can be displayed. In this meanwhile, the guide voice can be outputted but may be interrupted. Thus, the switching to the map picture is made any time after the start of the object guidance so that the information such as the position and surroundings of the object can be achieved.

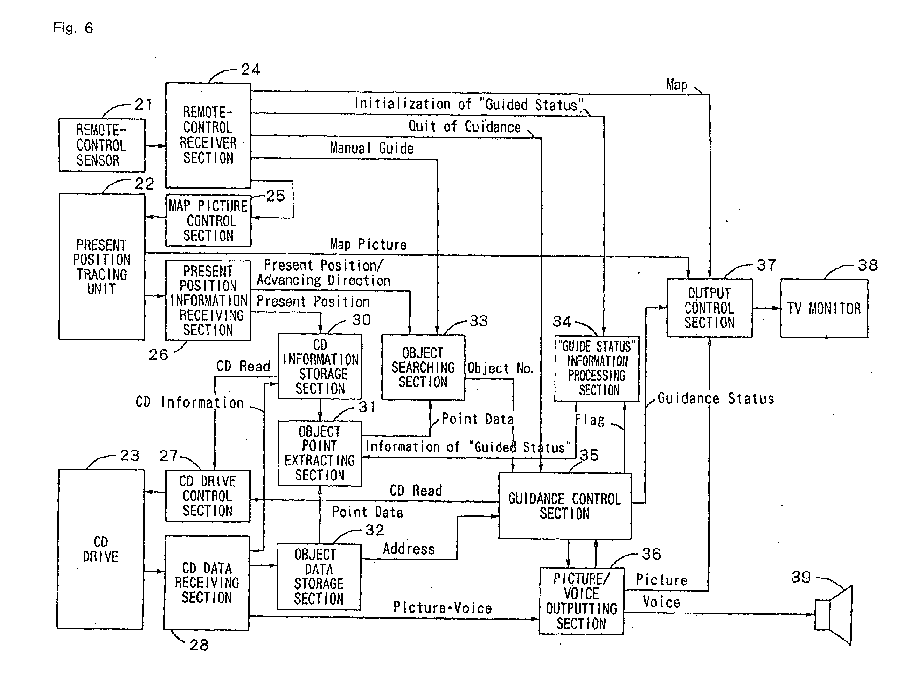

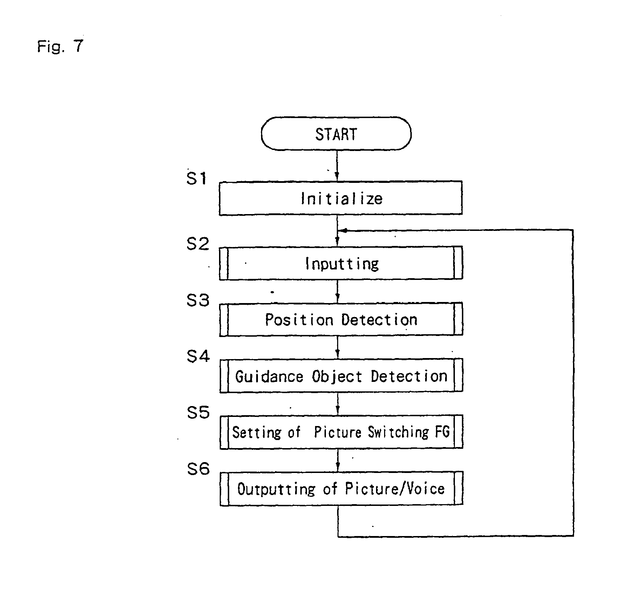

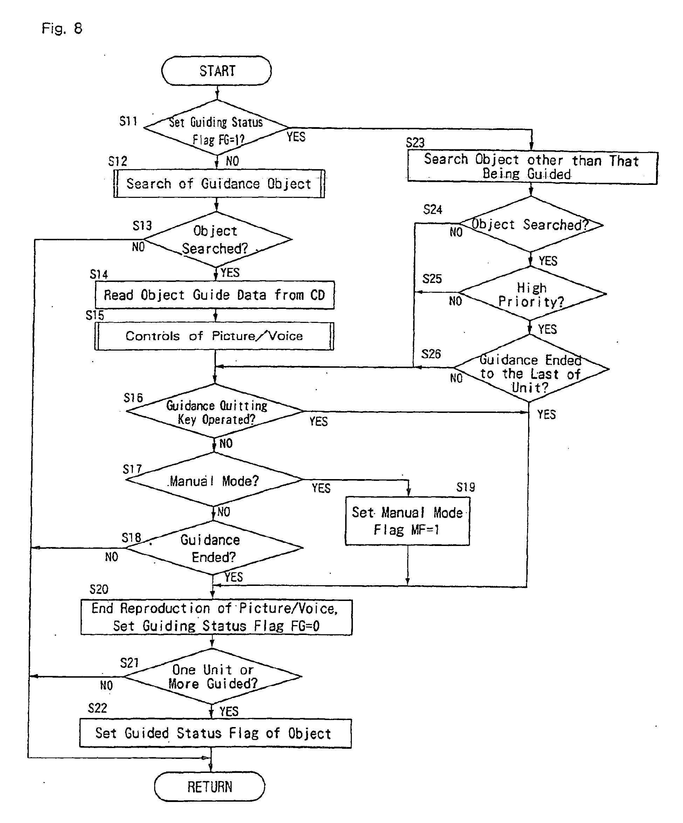

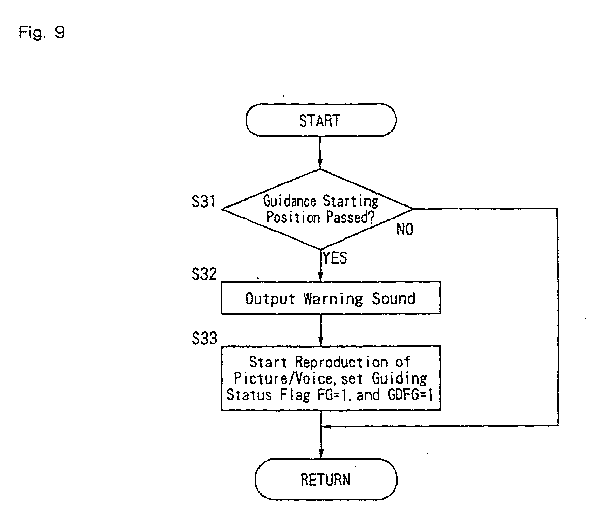

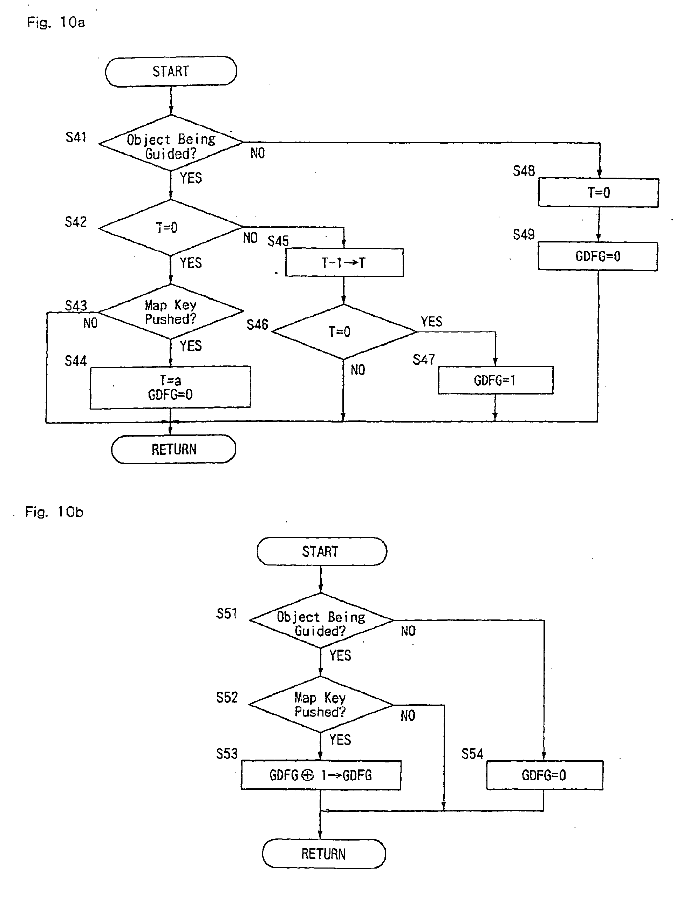

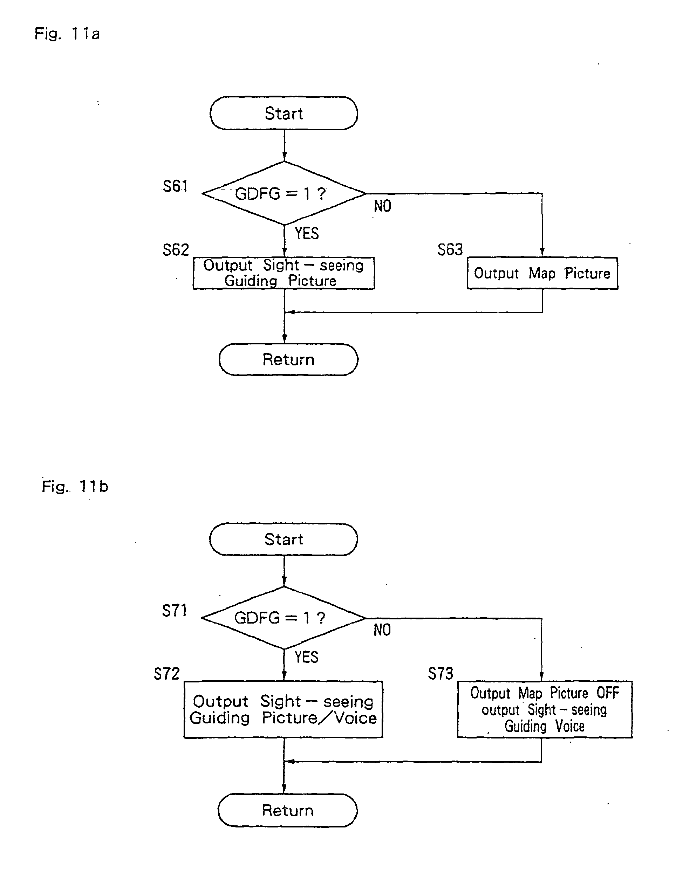

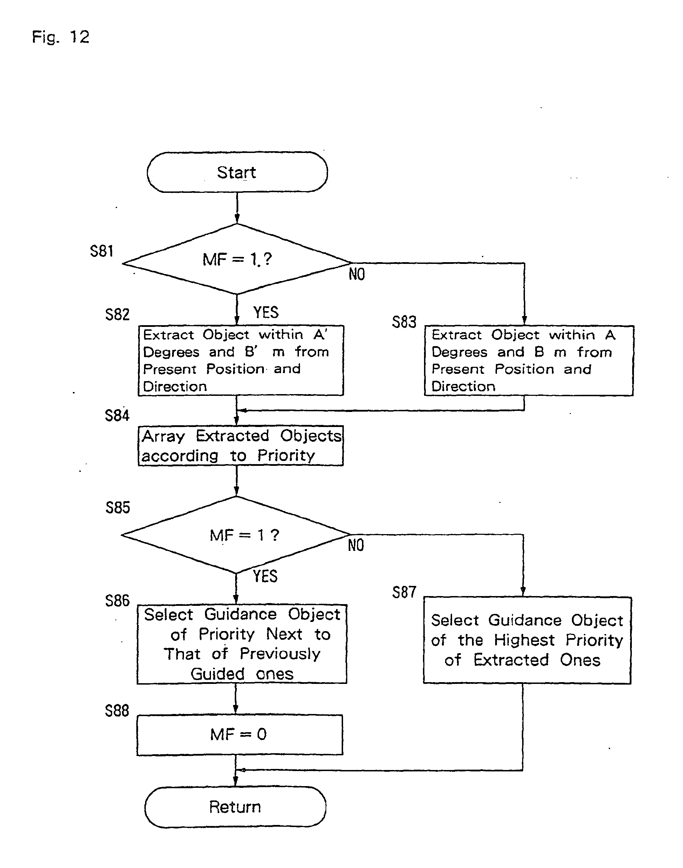

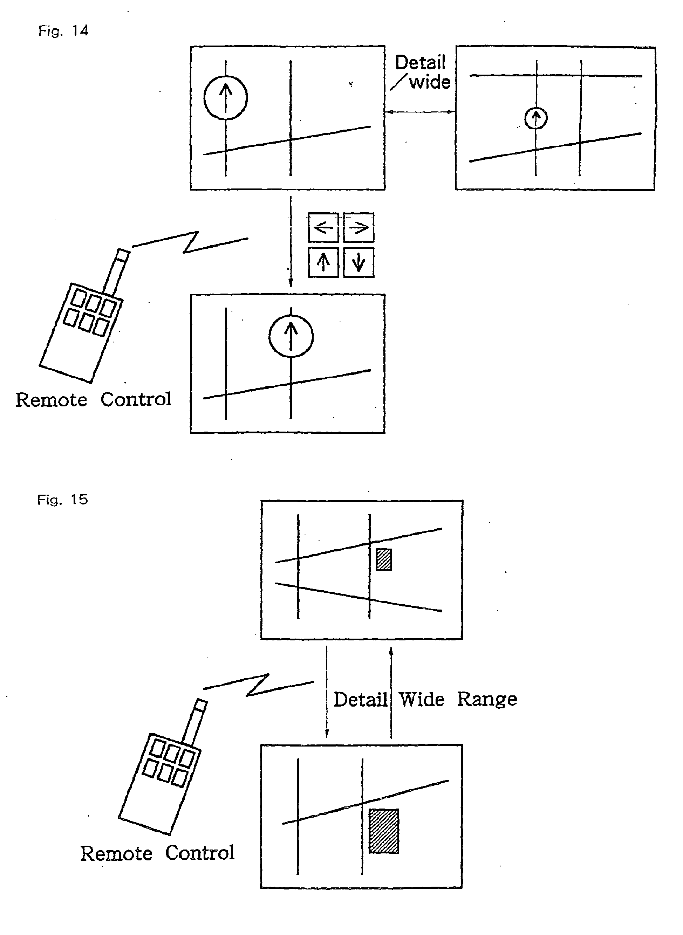

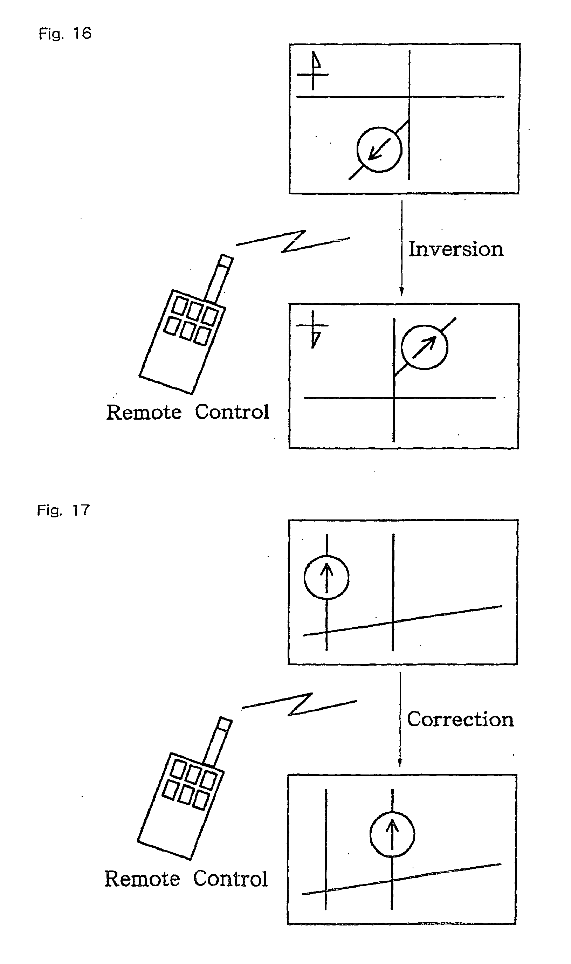

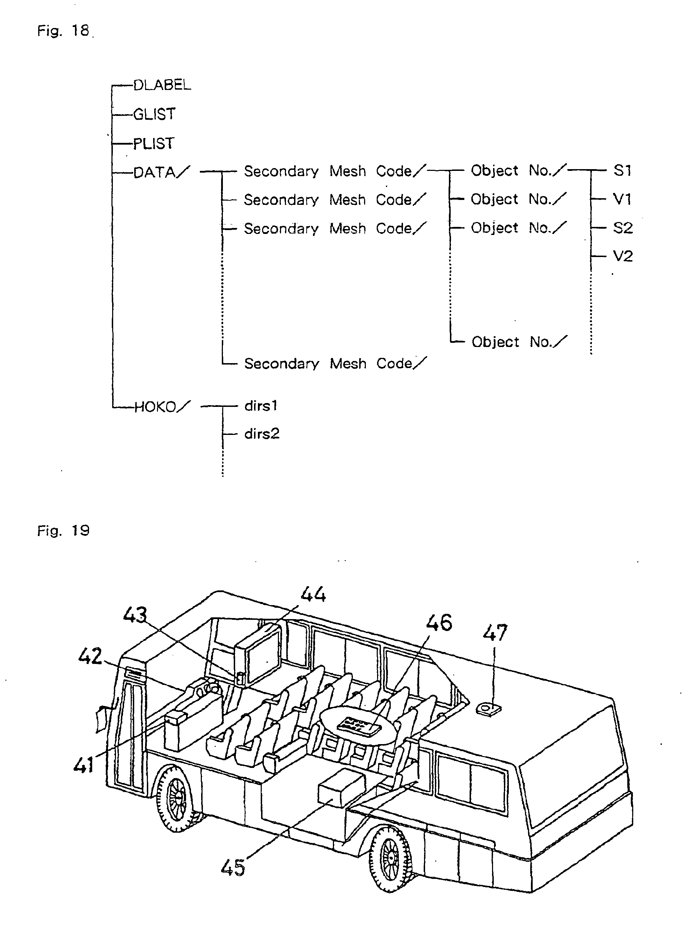

Here will be described a specific example of the construction of the guide output means. Fig. 6 is a block diagram showing an example of the system construction, especially its guide output means; Fig. 7 is a flow chart for explaining the overall routine of the guide system; Fig. 8 is a flow chart for explaining a routine for detecting the guidance object; Fig. 9 is a flow chart for explaining a routine for controlling the picture/voice outputs; Fig. 10 presents flow charts for explaining picture switching FG routines; Fig. 11 presents flow charts for explaining picture/voice outputting routines; Fig. 12 is a flow chart for explaining a guidance object searching routine; Fig. 13 is a diagram showing an example of keys constituting control means; Fig. 14 is a diagram for explaining the setting of a present position; Fig. 15 is a diagram for explaining the switching of the scale of a map picture; Fig. 16 is a diagram for explaining the decision of the north/south of the map picture; Fig. 17 is a diagram for explaining the correction of the present position; Fig. 18 is a diagram showing an example of the file structure of a guiding CD; and Fig. 19 is an exterior view of a vehicle carrying the guide system of the present invention.

In Fig. 6, a remote-control sensor 21 receives and converts the various control signals for starting/stopping operations, which are transmitted by a wireless remote control using optical signals, for example, into electric signals. The signals for controlling the remote control are exemplified by a "guided status" initializing instruction, a guidance quitting instruction, a manual guide instruction, a present position map picture control instruction or a map instruction. A remote-control receiver section 24 decodes the control signals received from the remote-control sensor 21, into key codes, and feeds the "guided status" initializing instruction to a "guided status" information processing section 34, the guidance quitting instruction to a guidance control section 35, the manual guide instruction to an object searching section 33, the present position map picture control instruction to a map picture control section 25, and the map instruction to an output control section 37. The map picture control section 25 converts the map picture control instruction, which was received by the remote-control sensor 21 and the remote-control receiver section 24, into a communication format and feeds the format to a present position tracing unit 22. In accordance with the map picture control instruction, the map picture control section 25 changes the scale of (e.g., reduces or enlarges) the map picture to be displayed on a TV monitor 38, and changes the direction (i.e., the north and south).

The present position tracing unit 22 detects and traces the present position of the vehicle and is equipped with the GPS, the vehicle speed sensor, the map data and so on so that it detects and traces the present position by the east longitude and north latitude, the present road being followed, the running direction (or advancing direction), and the vehicle speed thereby to provide not only these data but also the map picture data of predetermined azimuth and scale around the present position. Hence, the navigation system of the prior art may be applied as it is to the present position tracing unit 22. A present position information receiving section 26 extracts the present position information, which is received from the present position tracing unit 22, and feeds the present position and the followed road to a CD information storage section 30 and the present position, the advancing direction and the running speed to the object searching section 33.

A CD drive 23 reads out a plurality of guiding CDs stored with the guide information. The reading of the data from the CD is carried out: ① by rotating the CD by a predetermined number of turns; ② by moving the pickup to an address for reading out the data; and ③ by reading the data. These operation commands ① to ③ are independent of one another and are issued, if necessary, to the CD drive 23. These operations ① to ③ are executed, if necessary, so as to improve the durability and reduce the power consumption of the CD drive. A CD drive control section 27 processes the control information for controlling the reading of the guiding CD by the CD drive 23 on the basis of the CD-reading instruction coming from the CD information storage section or the guidance control section 35, thereby to instruct the CD drive 23. A CD data receiving section 28 receives the CD data, which are read out according to the reading control information, and feeds the CD information to the CD information storage section 30, the object data to an object data storage section 32, the data having the guide picture and voice compressed to the picture/voice outputting section.

The CD information storage section 30 issues the read instructions of the CD information for the individual guides and stores the CD information which is composed of the disc label for each guiding CD, the guidance object file and the guide point file. The CD information storage section 30 further issues the read instruction of the object data of the vicinity of the present position from the stored CD information and present position, and feeds an object point extracting section 31 with the coordinate range for extracting the object point data.

The object data storage section 32 stores the object data of the CD data received by the CD data receiving section 28. Of these, the object point data is fed to the object point extracting section 31, and the object address is fed to the guidance control section 35. The object point extracting section 31 extracts the object point data of the periphery of the present position of those object point data, which are stored in the object data storage section 32, while masking the "guided status" information. The object searching section 33 the object No. to be guided from the object point data, in terms of the present position, the advancing direction or the manual guide instruction.

The guidance control section 35 controls the guidance on the basis of the guidance quitting instruction of the remote-control receiving section 24 and the object No. of the object searching section 33. The guidance control section 35 selects the object address having the object No., which is searched by the object searching section 33, from the object address which is stored in the object data storage section 32, and feeds the CD read instruction to the CD drive control section 27, the guide instruction (to start or quit the guidance) to a picture/voice outputting section 36, and the guiding status of the picture/voice outputting section 36 to the output control section 37. Moreover, the guidance control section 35 sets a "guided status" flag of the "guided status" information processing section 34. This "guided status" information processing section 34 latches the "guided status" flag, which has been set by the guidance control section 35, till it is initialized by the "guided status" initializing instruction of the remote-control receiving section 24, and feeds the "guided status" information to the object point extracting section 31.

The picture/voice outputting section 36 decodes the guiding code data received through the CD data receiving section 28, into the guide picture to be outputted to the TV monitor 38 and the guide voice to be outputted to a speaker 39, and feeds them individually through the output control section 37 to the TV monitor and to the speaker 39. For the TV monitor 38, the output control section 37 switches the map picture sent from the present position tracing unit 22 to the guide picture sent from the picture/voice outputting section 36 by considering the guiding status inputted from the guidance control section 35 and the map switching signal of the remote-control receiving section 24. In order that any guided object may be prevented from being repeatedly detected, the "guided status" flag is set for the "guided object" thereby to leave the guided object unsearched when a "guidance object" is to be searched.

As described above, in Fig. 6, the remote-control sensor 21, the remote-control receiving section 24 and the map picture control section 25 constitute the control means 1 of Fig. 1, and the present position tracing unit 22 constitutes the map picture data storage means 2, the present position detecting means 5 and the map picture output means 4 of Fig. 1. Moreover, the CD drive 23, the output control section 37, the TV monitor 38 and the speaker 39 correspond to the guide data storage means 3, the switch means 7, the display output means 8 and the voice output means 9 of Fig. 1, respectively, and the remaining sections (26 to 36) constitute the guide output means 6 altogether.

Here will be summarized the operations of the whole system. First of all, when the system is started, the CD information storage section 30 issues the read instructions to read and store the CD information from each of the guiding CDs and is prepared for the guidance start. When the present position information is achieved from the present position tracing unit 22, the CD information storage section 30 refers the CD information to issue the read instruction of the object data contained in a predetermined area covering the present position, and stores it in the object data storage section 32. Then, the object point extracting section 31 extracts the object point data excepting the "guided status" information, from the object point data stored in the object data storage section 32. From the object point data extracted by the object point extracting section 31, the object searching section 33 searches the object No. or the object to be guided, on the basis of the present position and the advancing direction.

With reference to the address of the object data stored in the object data storage section 32 on the basis of the object No., the guidance control section 35 issues the voice/picture data read instruction to the CD drive control section 27. In response to this read instruction, the data of the (compressed) guide picture and (compressed) voice are inputted from the guiding CD to the picture/voice outputting section 36. This picture/voice outputting section 36 receives the guide instruction from the guidance control section 35 to decode and feed the data of the (compressed) guide picture and (compressed) voice into the guide picture signals of the TV monitor 38 and the guide voice signals of the speaker 39. At the same time, the picture/voice outputting section 36 feeds the guiding status to the guidance control section 35. When this guiding status is fed through the guidance control section 35 to the output control section 37, the picture signals to the TV monitor 38 and the map picture from the present position tracing unit 22 are switched in the output control section 37 into the guide picture from the picture/voice outputting section 36, and the guide picture and the map picture are switched in response to the map instruction of the remote-control receiving section 24. At the end of each guide unit, the guidance control section 35 is informed of it by the picture/voice outputting section 36. The "guiding status" flag of the information thus guided is set in the "guided status" information processing section 34 by the guidance control section 35.

Here will be described the entire processing flow of the guide system according to the present invention. In the entire flow, as shown in Fig. 7, the power is turned ON, and the entire system is initialized (at Step S1). After this, the input signals coming from the outside by the remote control or the like are processed (at Step S2), and the present position is located and traced (at Step S3) by using the various sensors. Moreover, the guidance object is detected according to the present position. If a plurality of guidance objects are detected, it is decided what object is to be guided, and this guidance object is outputted (at Step S4). Along with this guide output, moreover, an FG for switching the guidance outputting picture is set (at Step S5). Then, the map picture and the picture/voice of the guidance object are outputted (at Step S6).

The guidance object detecting routine of Step S4 is carried out, as shown in Fig. 8. First of all, it is examined (at Step S11) whether or not a "guiding status" flag FG to set at "1" during the guidance is at "1". If the "guiding status" flag FG is at not "1" but "0", the guidance object to be guided is searched (at Step S12). In short, it is decided in dependence upon the value "1" or "0" whether or not an object is being guided. If the guidance object is present, its guide data are read from the CD, and the picture output signals, the voice output signals and the status signals are outputted to execute the picture/voice output controls thereby to set the "guiding status" flag FG = 1 and a "map picture switching mode" flag GDFG = 1 (at Steps S13 to S15). After this, it is examined (at Steps S16 to S18) whether or not the guidance quitting key and the manual key have been operated and, if not, whether or not the guidance has been ended.

In the picture/voice output controls of Step S15, as shown in Fig. 9, it is examined (at Step S31) on the basis of the detected present position whether or not the guidance starting position has been passed. If the guidance starting position is passed, the guide output means 6 outputs the start voice signal to output the warning sound such as "Porn" (at Step S32). And, the picture signals, the voice signals and the status signals are outputted from the guide output means 6. These outputted voice signals are reproduced as the voice guidance by the voice output means 9, and the display signals of the map picture are converted into the picture signals by the switch means 7 in accordance with the status signal so that the guide picture is reproduced by the display output means 8. Here, the "guiding status" flag FG = 1, and the "map picture switching mode" flag GDFG = 1 (at Step S33).

If it is decided at Step S11 that the "guiding status" flag FG is at "1", an object other than those being guided is searched (at Step S23). If any, it is examined (at Steps S24 and S25) whether or not the searched object has a higher priority than that of the object being guided. If this answer is YES, the guidance is ended (at Step S26) to the guide unit of the object being guided, and the operations at and after Step S20 are executed.

If it is judged at the aforementioned Step S16 that the guide quit key has been operated, if it is judged at Step S17 that the manual mode has been invited by operating the manual key to set the "manual mode" flag MF = 1 (at Step S19), if it is judged at Step S18 that the guidance has been ended, or, if it is judged at Step S26 that the guidance has been ended to the last of the guide unit of the object being guided, the reproductions of the picture and voice are instantly ended, and the "guiding status" flag is set to FG = 0 (at Step S20). If, at this time, one guide unit or more is already guided, the "guided status" flag of that object is set (at Steps S21 and S22).

In the picture switching FG routine of Step S5, as shown in Fig. 10a, it is examined at first (at Step S41) whether or not the object is being guided. If this answer is NO, the time period T = 0, and the "map picture switching mode" flag GDFG = 0 (at Steps S48 and S49). If the answer is YES, it is further examined (at Step S42) whether or not T = 0. If T = 0, it is examined (at Step S43) whether or not the map key is pushed (according to the map instruction). If this answer is YES, the routine is returned after setting the time T = a and the "map picture switching mode" flag GDFG = 0 (at Step S44). If the map key is not pushed, on the other hand, the routine is returned as it is. Unless T = 0 at Step S42, T - 1 → T (at Step S45), and it is examined again (at Step S46) whether or not T = 0. Then, the routine is returned for T = 0 by setting the "map picture switching mode" flag GDFG = 1 (at Step S47) but directly for T ≠ 0. Thus, in case the map key is operated (ON), the picture is switched by setting the flag GDFG = 0, so that the object guide picture is restored after a constant time period from T = a to T = 0.

The picture may also be switched in response to each depression of the map key. In this case, as shown in Fig. 10b, it is examined (at Step S51) whether or not the object being guided and (at Step S52) whether or not the map key has been pushed (according to the map instruction). If the object is not guided, the "map picture switching mode" flag is set GDFG = 0 (at Step S54). If the map key is not pushed even during the object guidance, the routine is returned as it is. Each time the map key is depressed, an exclusive OR is taken (at Step S53) between the flag GDFG and the value "1" to update the flag GDFG so that the flag GDFG is inverted to switch the picture. In any event, the guide system according to the present invention may be able to switch the map picture any time when the present position is to be confirmed during the guidance.

In the picture/voice outputting routine of Step S6, as shown in Fig. 11a, it is examined at first (at Step S61) whether or not the "map picture switching mode" flag is GDFG = 1. If GDFG = 1, a sight-seeing guide picture is outputted (at Step S62). If GDFG ≠ 1, the map picture is outputted (at Step S63). In short, only the picture is switched depending upon whether or not the "map picture switching mode "flag is GDFG = 1. Not only this picture switching but also the voice outputting may be quitted. In this case, as shown in Fig. 11b, it is examined (at Step S71) whether or not the "map picture switching mode" flag is GDFG = 1. If GDFG = 1, the sight-seeing guide picture and the voice are outputted (at Step S72). If GDFG ≠ 1, the map picture is outputted, and the sight-seeing guide voice is turned OFF (at Step S73).

In the guidance object searching routine of Step S12, as shown in Fig. 12, it is examined at first (at Step S81) whether or not the "manual mode" flag is MF = "1". If the "manual mode" flag MF is at "0", an object satisfying the condition of the advancing angle within A degrees and the distance within B m, as described with reference to Fig. 2, is extracted (at Step S83) from the present position and direction and the vehicle speed. If the "manual mode" flag MF is at "1", an object satisfying the condition of wider ranges within A' degrees and B' m is extracted (at Step S82). The objects satisfying the conditions are arrayed (at Step S84) according to the priority. If the "manual mode" flag is MF = "1", the object having a priority next to that of the previously guided one is as the guidance object, and the "manual mode" flag MF is set to "0". If MF = "0", the object having the highest priority is selected as the guidance object.

In the aforementioned routine of extracting and outputting the guidance objects on the basis of priority, the object data stored in advance in the guiding CD are individually given priority so that the object No. may be extracted and outputted for the guidance from the point data searched by the object searching section 33, according to the priority. Moreover, the objects searched on the basis of the present position and the distances from the present position are individually determined so that the objects having the shorter distance may be preferentially outputted for the guidance. If, in this case, a plurality of guidance objects 1, 2, 3 and 4 are searched and extracted for the present position of the vehicle, for example, individual distances d₁, d₂, d₃ and d₄ to those guidance objects are determined. If the comparison of those distances reveals that d₄ < d₁ < d₃ < d₂, the guidance object 4 is guided and outputted at first, followed by the guidance object 1, the guidance object 3 and the guidance object 2 according to the recited order. Incidentally, the distance from the present position to an object can be calculated from the present position and the positional coordinates of the guidance object such as the coordinates of the east longitude and the north latitude. Of the objects searched on the basis of the present position, moreover, the guidance object having the shortest distance from the present position may be selected at first, and the distance from this guidance object to each object may be determined so that the objects may be may be repeatedly guided and outputted sequentially of the shorter distances between the individual objects. If, in this case, the guidance objects 1, 2, 3 and 4 are searched and extracted with respect to the present position of the vehicle, as described above, the distances d₁, d₂, d₃ and d₄ to the individual guidance objects are determined at first. If the comparison of those distances reveals that d₄ < d₁ < d₃ < d₂, the guidance object 4 is guided and outputted at first. Next, the distances d₄₁, d₄₂ and d₄₃ from the guidance object 4 to the guidance objects 1, 2 and 3are determined. If the result reveals that d₄₁ < d₄₃ < d₄₂, the guidance object 1 is guided and outputted. Likewise, if the distances d₁₂ and d₁₃ from the guidance object 1 to the guidance objects 2 and 3 are determined to reveal that d₁₂ < d₁₃, the guidance object 2 is guided and outputted, and the guidance object 3 is finally guided and outputted.

The wireless remote control is exemplified by the keys, as shown in Fig. 13. In Fig. 13: the start/stop key is used to start the program stored in the CD-ROM from the state in which the title picture is displayed, and to stop the program when the map picture is displayed; and the south/north key is used to invert the south and north of a map when the map picture is displayed. The map picture is displayed with its north directed upward in case the advancing direction is to the north with respect to the east-west direction. When the advancing direction is to the south with respect to the east-west direction, it is directed downward of the display. Thus, the south/north key is used to invert the map picture upward to the south or vice versa. A manual key is operated to start the guidance of a manual guidance object, if any, while the map picture or the guide picture is being displayed, and to start the guidance of a next candidate guidance object during the manual guidance. A detail key and a wide range key are operated to switch the scale of reduction of the map picture and to display the reduction scale. A set key is operated to effect the initialization and correct the present position on the map picture. A quit key is operated to quit the guidance to restore the map picture in the automatic guide picture and the manual guide picture and to quit the initialization and the correction of the present position in the course of operations. Arrow keys are operated in case the present position cursor is moved when the present position of the map picture is to be corrected. A map key is operated, when the guide picture and the map picture are switched and displayed, to issue a map instruction.

In case the memory is erased due to the initialization or the removal of the battery so that the present position is not stored, it is necessary to set the present position. For setting this present position in this case, as shown in Fig. 14, the arrow keys, the detail key, the wide key are operated to shift the present position on the map picture, and this present position is set by the set key.

In the automatic guide mode, the map picture is displayed if any guidance object is not present in the neighborhood and is not being guided, as described before. Even in this case, the object is being searched. However: the reduction scale of the map picture can be changed by operating the detail key and the wide range key, as shown in Fig. 15; the south/north direction of the map picture can be inverted by operating the south/north key, as shown in Fig. 16; and the present position of the vehicle can be corrected by operating the set key, the correction key and the arrow keys, as shown in Fig. 17.

Fig. 18 is a diagram showing an example of the file structure of the guiding CD. This file structure for the guiding CD is composed, as exemplified in Fig. 18, of a disc label header DLABEL, a guidance object file GLIST, a guide point file PLIST, a guide data DATA and a direction data HOKO, and is constructed of a plurality of CDs. The disc label header DLABEL is composed of disc label attribute data and an application area table (in the east longitude and the north latitude) to e stored in the discs, so that whether or not the present position is within the application area of the discs can be decided. The guidance object file GLIST has a guidance object data table, which is composed of a guidance object No., an object attribute (containing the point object, the linear object and the zone object, and the information of width in the case of the point object), the number of guidance starting points, the guide unit attribute (the voice/picture, and the information of length of the unit of only the voice), the object name, the secondary mesh No. of the object position, and the object position (in the east longitude and the north latitude). The guide point file PLIST has a table of the guide point data composed of the point attribute, the point position (in the east longitude and the north latitude), the advancing azimuth and direction, and the voice No.

Fig. 19 is an exterior view of a vehicle carrying the guide system of the present invention. Reference numeral 41 designates a guide output unit; numeral 42 a vehicle speed sensor; numeral 43 a remote-control sensor; numeral 44 a monitor TV; numeral 45 a present position tracing unit; numeral 46 a remote control; and numeral 47 a GPS antenna. In this example, the guide system is applied to a sight-seeing bus which is equipped with the remote control 46 and the guide output unit 41, the monitor TV 44 and the remote-control sensor 43 at the back of the driver's seat, so that the passenger is enabled to switch and indicate the sight-seeing guide picture and the map picture by operating the remote control 46.

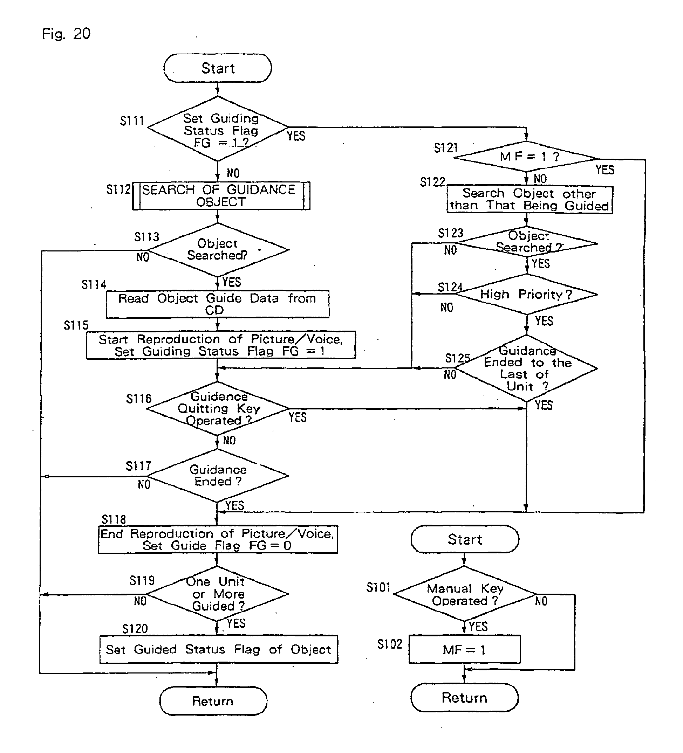

In the routine, as described with reference to Fig. 8, the mode cannot be switched to the manual one except under the predetermined conditions even if the manual key is operated. Therefore, another embodiment of the present invention, in which the manual mode can be executed at all times by operating the manual key, is shown in Fig. 20. The operation of the manual key in this case is always monitored (at Step S101), as shown in Fig. 20, and the "manual mode" flag MF is set to "1" (at Step S102) if the monitor reveals the operation of the manual key. In the object searching/guiding step, moreover, the "guiding status" flag FG to be set to "1" during the guidance is examined at first (at Step S111). If the "guiding status" flag FG is not at "1", the guidance object is searched (at Step S112). If this answer is YES, the guide data of the object are read from the CD to start the reproductions of the picture and voice, and the "guiding status" flag FG is set to "1" (at Steps S113 to S115). After this, it is examined whether or not the guidance quitting key is operated, and if not, it is examined whether or not the guidance is ended (at Steps S116 and S117).

If the "guiding status" flag FG is at "1", it is examined (at Step S121) whether or not the "manual mode" flag MF is at "1". If this "manual mode" flag MF is set to "1", the reproductions of the picture and voice are quitted, and the "guiding status" flag FG is reset to "0" (at Step S118). If, however, the "manual mode" flag MF is at "0", an object other than that being guided is searched (at Step S122). If any, it is examined whether or not the searched object has a higher priority than that being guided (at Steps S123 and S124). If this answer is YES, the guidance is ended (at Step S125) to the last of the guide unit of the object being guided, and the subsequent Step S118 and so on are executed.

If it is judged at the aforementioned Step S116 that the guide quit key is operated, if it is judged at Step S117 that the guidance is ended, if it is judged at Step S121 that the "manual mode" flag MF is set to "1", or if it is judged at Step S125 that the guidance is ended to the last of the guide unit of the object being guided, the reproductions of the picture and voice are quickly ended to reset the "guiding status" flag FG to "0" (at Step S118). If, at this time, one or more guide units have been guided, the "guided status" flag of the object is set (at Steps S119 and S120).

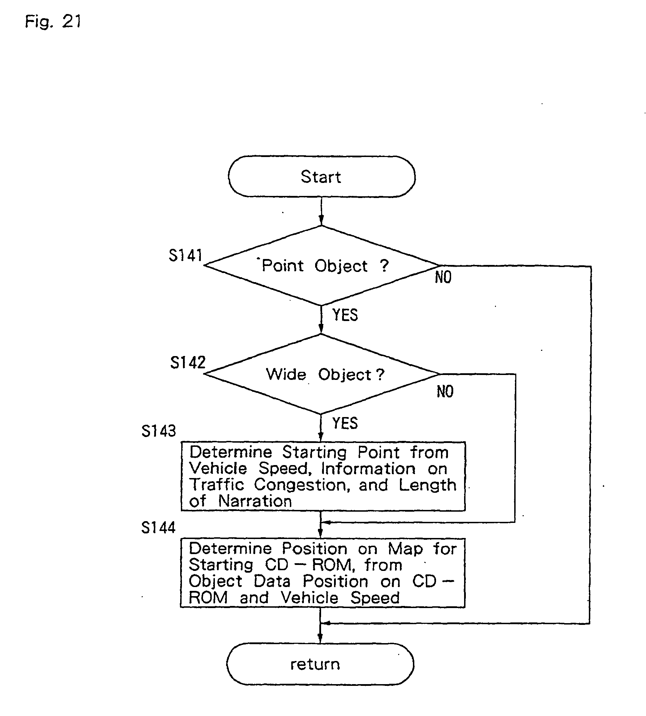

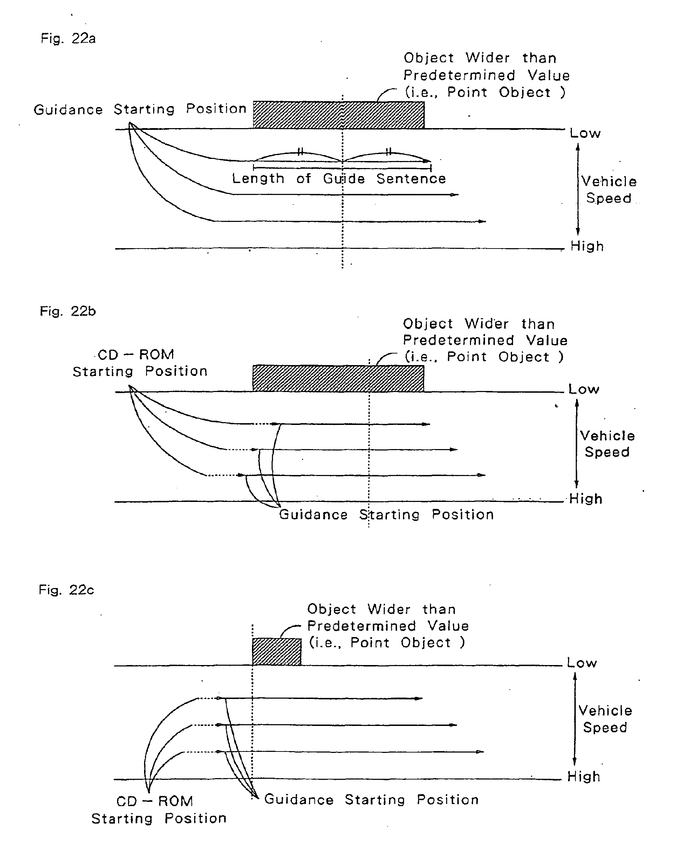

The routine of calculating the object guidance starting timing is to examine (at Steps S141 and S142) whether the object attribute belongs to the point object or the (point) object having a width, as shown in Fig. 21. Here, the decision of the point object or the wide (point) object is carried out such that an object having a predetermined width or more belongs to the wide (point) object whereas an object having a less width belongs to the point object (having a small width). In the case of a point object having a width, as shown in Fig. 22a, the guidance starting position is changed to align the narration center of the guidance output and the object center (e.g., the center point of the portion of the guidance object facing the road). First of all, a distance s to be covered by the vehicle from the start to the end of the narration is determined by s = v· t from the length (t) of the narration, and the guidance starting point is determined to this side of s/2 from the center of the object (at Step S143).

On the other hand, since it takes a long time to read the CD-ROM or the like after this CD-ROM has been started, the guidance starting point may go out especially in case the vehicle speed is high. Therefore, the guidance starting point is set, as described above in Fig. 22b, the position on the map for starting the CD-ROM is calculated (at Step S144) from the object data position on the CD-ROM and the vehicle speed.

For a point object having a width less than the predetermined value, the guidance starting position is fixed, as shown in Fig. 22c, the position on the map for starting the CD-ROM is calculated (at Step S144) from the object data position on the CD-ROM and the vehicle speed.

As has been described hereinbefore, according to the present invention, a sight-seeing object is searched, when the vehicle runs, within the ranges of predetermined angle and distance on the basis of the present position of the vehicle. In case, moreover, the sight-seeing object is searched under predetermined conditions during the run of the vehicle but is not found out, the guidance object is searched by operating the manual key to change the search ranges of the predetermined angle and distance. As a result, the object, which could not be searched with the initial searching ranges, can be extracted by changing the searching ranges so that it can be guided. If the searching ranges for the present position of the vehicle are identical between the forward and backward routes if the same course is taken by the forward and backward routes, for example, what can be searched for these two routes may probably be only one common object to serve the same guidance between the forward and backward routes. However, when the guidance of an object different from that guided in the forward route is desired on the backward route, the manual key is operated to change the searching ranges. Then, the object different from that of the forward route can be searched on the return route so that the passengers can be satisfied by the sight-seeing guidance by giving them the guidance different from that served on the forward route. In case, moreover, the guidance object is to be searched within the ordinary searching ranges and is outputted as the guidance, it may occur that the object cannot be searched for a long time or that the sight-seeing guidance is requested by a passenger. In this case, the searching ranges are changed to search the guidance object by operating the manual keys so that the sight-seeing object can be reliably searched and extracted for the guidance.

Incidentally, the present invention should not be limited to the foregoing embodiments but can be modified in various manners. In the embodiments, for example, the searching ranges are conditioned within the advancing angle of A degrees and the distance of B m, and are widened to the values A' degrees and B' me, when the manual keys are depressed, so that the object satisfying the conditions for the changed searching ranges is extracted. However, the searching conditions may be modified to select the guidance object in a manner to specify its kind. Specifically, the searching conditions are initially set for the buildings such as a temple but may be changed to another sight-seeing place of note other than the buildings when the manual keys are depressed. Alternatively, there may be added the condition under which the objects located ahead of the present position of the vehicle are exclusively extracted whereas the objects behind in the advancing direction are kept away from the guidance. In the foregoing embodiments, furthermore, the guidance object is switched for a predetermined time period to the map picture by the key operation, or the guide picture and the map picture are alternately switched each time the keys are operated. In short, however, it is sufficient that the guide picture can be switched any time when the present position is to be confirmed during the guidance. Even in the switching case to the map picture, furthermore, not only the voice is outputted like before or stopped but also the information on the map picture may be outputted in voice.

In the foregoing embodiments, furthermore, the object information of the guidance object is exemplified by the width information given to the object so that the guidance starting position of the object may be changed according to the vehicle speed. In case the guidance object is a building, however, the visibility of the guidance object from the road being followed is influenced by the height of the object or the density of buildings around the object. Therefore, the visible range of the guidance object may be given as the information of the guidance object for the conditions of the guidance starting point. Moreover, the object information of the guidance object may be the kinds of object stored, which are classified into buildings or natural landscapes such as mountains, rivers or lakes for the conditions to set the guidance starting point. This guidance starting point may be changed according to the road information such as the traffic congestion.

## Claims

1. A guide system comprising:
guide data storage means (3) stored with guide data relating to an object for guiding said object along a road or on a street or in an area;
present position detecting means (5) for detecting and tracing a present position;
reading means for reading out guide data from said guide data storage means (3):
guide output means (6) for outputting the guide data relating to the object read out by said reading out means;
first search means (6a) for searching in a geographical range guide data relating to the object to be guided on the basis of the present position obtained by said present position detecting means (5); wherein the geographical range searched by the first search means (6a) is within ± A degrees with respect to the vehicles advancing direction and within a distance B from said detected present position;
second search means (6b) for searching guide data relating to the object to be guided within a geographical range different from that of said first search means (6a); wherein the geographical range searched by the second search means (6b) is within ± A' degrees with respect to said vehicles advancing direction and within a distance B' from said detected present position; and wherein A' > A, B' > B;
said reading out means is for reading out the guide data from said guide data storage means (3) searched either by said first search means (6a) or said second search means (6b): and
means for issuing an instruction for a search operation by said second search means (6b).

2. A guide system according to claim 1, wherein a manual key is provided for instructing the search of said second search means (6b), and
wherein said guide output means (6) searches the guide data relating to an object to be guided by said second search means (6b) in place of said first search means (6a), when said manual key is operated, so that said guide data are extracted and outputted from said guide output means (6).

3. A guide system according to claim 1 or 2, wherein in case a plurality of objects are searched, said guide output means (6) adds information of priority to the extracted objects, to guide and output the objects on the basis of the added priority information.

4. A guide system according to claim 1, 2 or 3, wherein said priority information is the priority orders which are individually added to the objects of the guide data stored in said guide data storage means (3).

5. A guide system according to claim 1, 2 or 3, wherein said priority information is the information in which priority is added sequentially of the shorter distances from the present position obtained by said present position detecting means (5) to the searched guide substances.

6. A guide system according to claim 1, 2 or 3, wherein said priority information is the information in which priority is added according to the distances from the present position obtained by said present position detecting means (5) to the searched guidance objects and the distances between the searched guidance objects.

7. A guide system according to any of claims 1 to 6, wherein said guide output means (6) outputs an object list, if a plurality of guidance objects are extracted, to guide and output a designated object from said list.

8. A guide system according to any one of claims 1 to 7, further comprising means for flagging guide data for the guidance object as having been shown, responsive to output of guidance object, and wherein said first and second search means ignore guidance objects as having been shown in said search.

## Patentansprüche

1. Führungssystem mit:
einer Führungsdatenspeichereinrichtung (3), in der Führungsdaten gespeichert sind, die ein Objekt zur Führung des Objekts längs einer Strecke oder auf einer Straße oder in einem Gebiet betreffen;
eine die gegenwärtige Position ermittelnde Einrichtung (5) zur Ermittlung und Verfolgung einer gegenwärtigen Position; eine Ausleseeinrichtung zum Auslesen von Führungsdaten aus der Führungsdatenspeichereinrichtung (3);
eine Führungsausgabeeinrichtung (6) zur Ausgabe der Führungsdaten, die das Objekt betreffen, die durch die Ausleseeinrichtung ausgelesen werden;
einer ersten Sucheinrichtung (6a), um in einem geographischen Bereich Führungsdaten, die das zu führende Objekt betreffen, auf der Grundlage der gegenwärtigen Position zu suchen, die durch die die gegenwärtige Position ermittelnde Einrichtung (5) erhalten wird; wobei der durch die erste Sucheinrichtung (6a) durchsuchte geografische Bereich innerhalb ±A° bezüglich der Fahrzeugvorwärtsbewegungsrichtung und innerhalb einer Entfernung B von der ermittelten gegenwärtigen Position liegt;
einer zweiten Sucheinrichtung (6b), um Führungsdaten, die das zu führende Objekt betreffen, innerhalb eines geographischen Bereichs zu suchen, der sich von jenem der ersten Sucheinrichtung (6a) unterscheidet; wobei der durch die zweite Sucheinrichtung (6b) durchsuchte geografische Bereich innerhalb ±A'° bezüglich der Fahrzeugvorwärtsbewegungsrichtung und innerhalb einer Entfernung B' von der ermittelten gegenwärtigen Position liegt; und wobei A' > A, B' > B;
wobei die Ausleseeinrichtung zum Auslesen der Führungsdaten aus der Führungsdatenspeichereinrichtung (3) dient, die entweder durch die erste Sucheinrichtung (6a) oder die zweite Sucheinrichtung (6b) gesucht werden; und eine Einrichtung zum Ausgeben eines Befehls für eine Suchoperation durch die zweite Sucheinrichtung (6b).

2. Führungssystem nach Anspruch 1, wobei eine manuelle Taste zum Befehlen der Suche der zweiten Sucheinrichtung (6b) vorgesehen ist, und
wobei die Führungsausgabeeinrichtung (6) die Führungsdaten, die ein zu führendes Objekt betreffen, durch die zweite Sucheinrichtung (6b) anstelle der ersten Sucheinrichtung (6a) sucht, wenn die manuelle Taste betätigt wird, so daß die Führungsdaten aus der Führungsausgabeeinrichtung (6) extrahiert und ausgegeben werden.

3. Führungssystem nach Anspruch 1 oder 2, wobei falls mehrere Objekte gesucht werden, die Führungsausgabeeinrichtung (6) eine Prioritätsinformation zu den extrahierten Objekten hinzufügt, um die Objekte auf der Grundlage der hinzugefügten Prioritätsinformation zu führen und auszugeben.

4. Führungssystem nach Anspruch 3, wobei die Prioritätsinformation aus Prioritätsreihenfolgen besteht, die einzeln zu den Objekten der Führungsdaten hinzugefügt werden, die in der Führungsdatenspeichereinrichtung (3) gespeichert sind.

5. Führungssystem nach Anspruch 3, wobei die Prioritätsinformation die Information ist, in der Priorität der kürzeren Entfernungen von der gegenwärtigen position, die durch die die gegenwärtige Position ermittelnde Einrichtung (5) erhalten wird, zu den gesuchten Führungsentfernungen aufeinanderfolgend hinzugefügt wird.

6. Führungssystem nach Anspruch 3, wobei die Prioritätsinformation die Information ist, in der Priorität gemäß den Entfernungen von der gegenwärtigen Position, die durch die gegenwärtige Position ermittelnde Einrichtung (5) erhalten wird, zu den gesuchten Führungsobjekten und den Entfernungen zwischen den gesuchten Führungsobjekten hinzugefügt wird.

7. Führungssystem nach einem der Ansprüche 1 bis 6, wobei die Führungsausgabeeinrichtung (6) eine Objektliste ausgibt, wenn mehrere Führungsobjekte extrahiert werden, um ein bezeichnetes Objekt aus der Liste zu führen und auszugeben.

8. Führungssystem nach einem der Ansprüche 1 bis 7, das ferner eine Einrichtung zur Kennzeichnung von Führungsdaten für das Führungsobjekt, das gezeigt worden ist, aufweist, die auf eine Ausgabe des Führungsobjekts anspricht, und wobei die erste und zweite Sucheinrichtung Führungsobjekte ignorieren, die in der Suche gezeigt worden sind.

## Revendications

1. Système de guidage comprenant :
un moyen (3) de stockage de données de guidage stockées avec des données de guidage relatives à un objet pour guider ledit objet le long d'une route ou d'une rue ou dans une zone ;
un moyen (5) détecteur de position actuelle pour détecter et suivre une position actuelle ;
un moyen de lecture pour lire des données de guidage dans ledit moyen (3) de stockage de données de guidage ;
un moyen (6) de sortie de guidage pour sortir les données de guidage relatives à l'objet lues par ledit moyen de lecture ;
un premier moyen (6a) de recherche pour rechercher dans une zone géographique des données de guidage relatives à l'objet à guider en fonction de la position actuelle obtenue par ledit moyen (5) détecteur de position actuelle ;
dans lequel la zone géographique dans laquelle recherche le premier moyen (6a) de recherche se trouve dans les limites de ±A degrés par rapport à la direction d'avancement du véhicule et au maximum à une distance B de ladite position actuelle détectée ;
un second moyen (6b) de recherche pour rechercher des données de guidage relatives à l'objet à guider dans une zone géographique différente de celle dudit premier moyen (6a) de recherche ;
dans lequel la zone géographique dans laquelle cherche le second moyen (6b) de recherche se trouve dans les limites de ±A' degrés par rapport à ladite direction d'avancement du véhicule et au maximum à une distance B' de ladite position actuelle détectée, et dans lequel A' > A, B' > B ;
ledit moyen de lecture sert à lire les données de guidage dans ledit moyen (3) de stockage de données de guidage recherchées soit par ledit premier moyen (6a) de recherche, soit par ledit second moyen (6b) de recherche ; et
un moyen pour émettre une instruction pour une opération de recherche par ledit second moyen (6b) de recherche.

2. Système de guidage selon la revendication 1, dans lequel une touche manuelle est prévue pour ordonner la recherche du second moyen (6b) de recherche, et
dans lequel ledit moyen (6) de sortie de guidage recherche les données de guidage relatives à un objet à guider par le second moyen (6b) de recherche à la place dudit premier moyen (6a) de recherche, lorsque ladite touche manuelle est actionnée, de sorte que lesdites données de guidage sont extraites et sorties dudit moyen (6) de sortie de guidage.

3. Système de guidage selon la revendication 1 ou 2, dans lequel, si une pluralité d'objets sont recherchés, ledit moyen (6) de sortie de guidage ajoute des informations de priorité aux objets extraits, pour guider et sortir les objets en fonction des informations de priorité ajoutées.

4. Système de guidage selon la revendication 3, dans lequel lesdites informations de priorité sont les ordres de priorité qui sont ajoutés individuellement aux objets des données de guidage stockées dans ledit moyen (3) de stockage de données de guidage.

5. Système de guidage selon la revendication 3, dans lequel lesdites informations de priorité sont les informations dans lesquelles une priorité est ajoutée en séquence des plus courtes distances à partir de la position actuelle obtenue par ledit moyen (5) détecteur de position actuelle aux substances de guidage recherchées.

6. Système de guidage selon la revendication 3, dans lequel lesdites informations de priorité sont les informations dans lesquelles une priorité est ajoutée selon les distances à partir de la position actuelle obtenue par ledit moyen (5) détecteur de position actuelle aux objets de guidage recherchés et aux distances entre les objets de guidage recherchés.

7. Système de guidage selon l'une des revendications 1 à 6, dans lequel ledit moyen (6) de sortie de guidage sort une liste d'objets, si une pluralité d'objets de guidage sont extraits, pour guider et sortir un objet désigné de ladite liste.

8. Système de guidage selon l'une quelconque des revendications 1 à 7, comprenant en outre un moyen pour indiquer des données de guidage pour l'objet de guidage ayant été représenté, réagissant à une sortie de l'objet de guidage, et dans lequel lesdits premier et second moyens de recherche ignorent des objets de guidage ayant été représentés dans ladite recherche.
